# EUROPEAN PATENT SPECIFICATION

(11) **EP 3 182 826 B1**
(45) Date of publication and mention of the grant of the patent: **31.03.2021**
(21) Application number: 16838056.6
(22) Date of filing: 15.09.2016
(51) Int. Cl.: A21B 2/00, H05B 3/00, F24C 7/08, F24C 7/06, F24C 7/04

(54) **MICROWAVE WIRE MESH OVEN**
MIKROWELLENDRAHTGITTEROFEN
FOUR MICRO-ONDES À TREILLIS MÉTALLIQUE

(30) Priority: 15.09.2015 US 201562219112 P; 01.02.2016 US 201662289898 P
(43) Date of publication of application: 28.06.2017
(73) Proprietor: De Luca Oven Technologies, LLC, San Francisco, California 94104 (US)
(72) Inventor: DE LUCA, Nicholas P., San Francisco, California 94104 (US); PERKINS, Andrew, San Francisco, California 94104 (US)
(74) Representative: Dehns
(86) International application number: PCT/US2016/052018
(87) International publication number: WO 2017/049014

(56) References cited:
- WO-A1-2014/208101
- WO-A1-2015/095191
- CA-A1- 2 887 005
- CN-B- 1 531 374
- FR-A1- 2 509 109
- JP-A- 2007 187 433
- US-A- 4 314 127
- US-A- 4 481 396
- US-A- 5 177 333
- US-A1- 2004 238 532
- US-A1- 2006 070 530
- US-A1- 2010 166 397

## Description

### FIELD

The present disclosure teaches a microwave and wire mesh oven that enables a heating of a wire mesh element and the use of a microwave generator (magnetron) for use in high speed heating applications. In particular, the system includes a wire mesh element to radiate blackbody radiation to heat primarily an exterior of an item, and a magnetron to radiate microwaves to heat primarily an interior of an item. The blackbody transfers heat either by conduction in solids, convection of fluids (liquids or gases) or radiation through anything that will allow radiation to pass

### BACKGROUND

In the prior art, disposing a wire mesh heating element to radiate blackbody radiation on item disposed in a microwave oven cavity is difficult due to leakage of microwaves, current leakage, effect of microwaves on the wire mesh, a spark hazard when microwaves impinge on the wire mesh and the like.

FR 2509109 discloses an electric oven including a microwave heating device and an additional heating element.

US 2010/0166397 discloses a high speed cooking apparatus employing a wire mesh heating element.

### SUMMARY

Viewed from one aspect, the present invention provides a microwave wire mesh oven comprising: a microwave oven cavity; a heating element; and a magnetron configured to generate microwaves, wherein some of the generated microwaves impinge on the heating element; characterised in that the microwave oven further comprises a conductor disposed in the oven cavity and electrically connecting the heating element to a power supply, and a power supply filter in electrical connection with the wire mesh element, wherein the power supply filter removes microwave energy that impinges on the wire mesh element, and in that the heating element is a wire mesh element positioned to radiate black body radiation into the microwave oven cavity.

The present teachings provide embodiments of heating system and methods, and features thereof, which offer various benefits. The system can employ multiple electrodes, systems, operations, and the like to promote safe, efficient, and effective use of the devices and methods disclosed herein.

In certain embodiments of the invention, the microwave oven cavity is defined by sidewall and the conductor traverses through the sidewall via an opening wherein the way the opening is shielded against electromagnetic energy.

The wire mesh element may have a surface area including a non-contact area and a contact area along at least 50% of a wire mesh element length; a conductor in electrical contact with the wire mesh; an elastic thermal insulator bonded to at least one edge of the wire mesh element; and a fastener to secure the elastic thermal insulator, wherein the contact area contacts the conductor and the elastic thermal insulator is stretched and secured tautly under tension to the fastener prior to operation of the wire mesh heater, and the elastic thermal insulator keeps the wire mesh element tautly under tension during operation of the wire mesh heater.

It is to be understood that both the foregoing general description and the following detailed description are exemplary and explanatory and are intended to provide further explanation of the invention as claimed.

### BRIEF DESCRIPTION OF THE FIGURES

The accompanying drawings, which are included to provide a further understanding of the invention and are incorporated in and constitute a part of this specification, illustrate embodiments of the invention, and together with the description serve to explain the principles of the invention. The teachings referred to below relate to exemplary embodiments.
FIG. 1 is an isometric view of a wire mesh heating element disposed in a microwave oven cavity, according to various embodiments.
FIG. 2 is a schematic view of a conductor piercing a sidewall of a microwave oven cavity, according to various embodiments.
FIG. 3 is a schematic view of a wire mesh heating element secured to sidewalls of a microwave oven cavity.
FIG. 4A is a logical view of a wire mesh heater assembly, according to various embodiments.
FIG. 4B is a logical view of a wire mesh heater assembly, according to various embodiments.
FIG. 5A is an isometric view of a microwave mesh heater, according to various embodiments.
FIG. 5B is an isometric view of a microwave mesh heater, according to various embodiments.
FIG. 6A is an isometric view of a microwave mesh heater including an air duct, according to various embodiments.
FIG. 6B is an isometric view of a cutout of a microwave mesh heater including an air duct, according to various embodiments.
FIG. 6C is an isometric view of a wire mesh heater assembly including an air duct, according to various embodiments.
FIG. 6D is an isometric view of a wire mesh heater assembly including an air duct, according to various embodiments.
FIG. 7A is an isometric view of a wire mesh heater assembly including an air duct, according to various embodiments.
FIG. 7B is an isometric view of a wire mesh heater assembly including an air duct, according to various embodiments.
FIG. 8A is an isometric view of a microwave mesh heater including a wire mesh heater assembly disposed near the bottom of an oven cavity, according to various embodiments.
FIG. 8B is an isometric view of a microwave mesh heater including a wire mesh heater assembly disposed near the bottom of an oven cavity, according to various embodiments.
FIG. 8C is an isometric view of a microwave mesh heater, according to various embodiments.
FIG. 8D is an isometric view of a top and bottom wire mesh heater assembly, according to various embodiments.
FIG. 9A is an isometric view of a microwave mesh heater including a wire mesh heater assembly disposed parallel to a bottom of an oven cavity, according to various embodiments.
FIG. 9B is an isometric view of a microwave mesh heater including a wire mesh heater assembly disposed orthogonal to a bottom of an oven cavity, according to various embodiments.
FIG. 9C is an isometric view of a microwave mesh heater including a wire mesh heater assembly disposed parallel to a bottom of an oven cavity and a rack disposed therein, according to various embodiments.
FIG. 9D is an isometric view of a microwave mesh heater including a wire mesh heater assembly disposed orthogonal to a bottom of an oven cavity and a tray disposed therein, according to various embodiments.
FIG. 10A is an isometric view of a microwave mesh heater including a wire mesh heater assembly disposed orthogonal to a bottom of an oven cavity, according to various embodiments.
FIG. 10B is an isometric view of a microwave mesh heater including a wire mesh heater assembly disposed orthogonal to a bottom of an oven cavity, according to various embodiments.
FIG. 11A is an isometric view of a wire mesh heater assembly including an air duct, according to various embodiments.
FIG. 11B is an isometric view of a wire mesh heater assembly including an air duct, according to various embodiments.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DESCRIPTION

The present teachings disclose efficiently transferring electrical energy to a wire mesh heating element. In exemplary embodiments, the transfer is evenly distributed over a breadth or length of the wire mesh. This may reduce the stress induced in the wire mesh, and reduce the heat being generated during the electrical energy transfer. The present teachings may evenly distribute any heat being generated during the electrical energy transfer. By reducing the heating and/or more evenly distributing the heat, the mean time between failures of the wire mesh heater may be increased.

The present teachings disclose a heating element system that operates semi-continuously or continuously at high temperatures. The present teachings also disclose constant tensioning of a wire mesh heating element during use so that the element as a whole remains flat. The present teachings also disclose a wire mesh heating element that can operate in a heating cavity in a semi-continuous or continuous mode and that can be replaced easily.

In exemplary embodiments, a wire mesh heating assembly may include a primary conductor directly attached to the wire mesh heating element, and a secondary conductor or holder to secure the primary conductor through which the electrical current can flow. In some embodiments, the primary conductor may include a primary conduction rod or electrode.

According to various embodiments, the primary conductor may be continuous or fully or partially segmented. The primary conductor may contact a length of the wire mesh element.

The secondary conductor may tension, stretch or keep taut the wire mesh heating element in operation. In some embodiments, the secondary conductor may provide an adjustable tension for the wire mesh heating element in operation. The secondary conductor may include multiple tension points, a heat shield protection, and a latch or the like to provide ease of gripping and release of the primary conductor.

In exemplary embodiments, a flexible or movable electrical connection may connect an electrical energy source to the primary conductor. The flexible or movable electrical connection may include a stranded wire or telescoping nested tubes attached to the secondary conductor.

In exemplary embodiments, the wire mesh heating element may include a wire mesh cloth. In exemplary embodiments, the wire mesh heating element may include a wire intersecting wire strands with openings defined by the wire stands. In exemplary embodiments, the wire mesh heating element may include a perforated metal sheet.

In exemplary embodiments, the wire mesh heating element may be formed to include only curved orifice openings for at least an area of the wire mesh that will be exposed to microwave radiation. In exemplary embodiments, the wire mesh may include round or oval openings. For example, the wire mesh heating element may be formed by perforating a metal sheet with round or oval holes. In an exemplary embodiment, the wire mesh may include holes/openings that are 0.020 inches (0.051 cm) in diameter and each of opening/hole centers are offset by 0.043 inches (0.109 cm) from one another. Such a wire mesh can provide, for example, a 20% open area through the wire mesh..

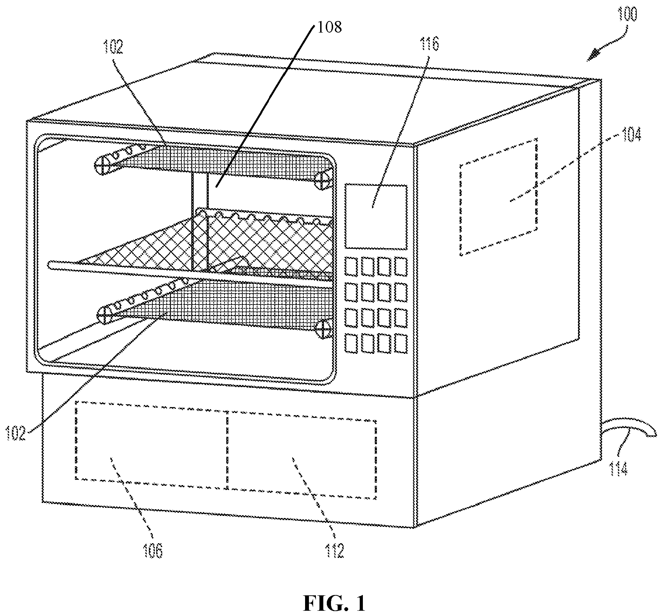

FIG. 1 is an isometric of a wire mesh and microwave heater, according to various embodiments.

A wire mesh and microwave heater 100 may include a wire mesh element 102, a magnetron 104, an AC-DC converter or high wattage power supply 106 to energize the wire mesh element 102, an microwave oven cavity 108 to house an item to be heated, a sidewall 110 to define an oven cavity 108, an operator console 116 and a power line 114 to receive electrical energy from an energy producer, such as a utility.

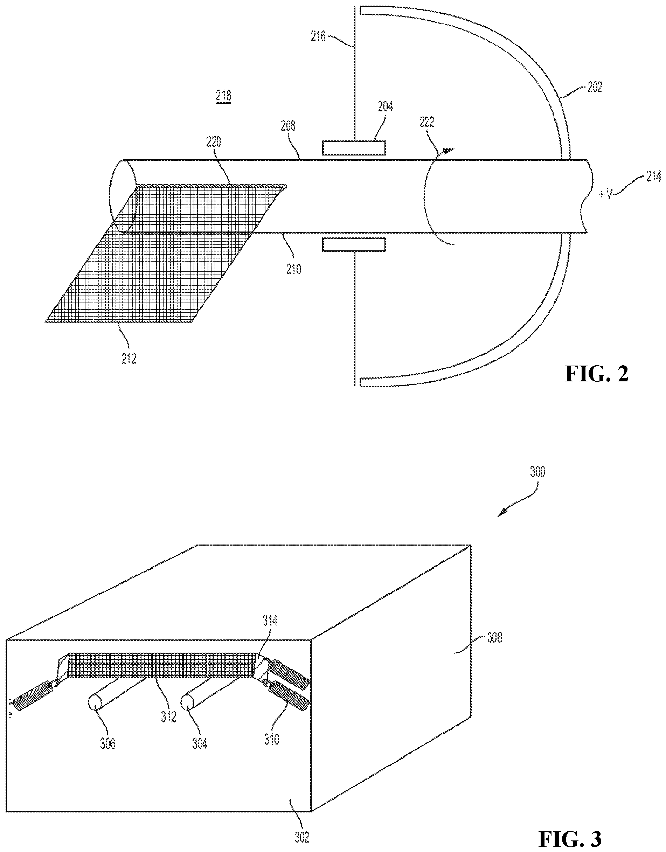

The wire mesh element 102 is disposed in the oven cavity 108 where radiation from the magnetron 104 impinges on the wire mesh element 102. In some embodiments, only one wire mesh element 102 may be disposed in the oven cavity 108. Both the magnetron 104 and the wire mesh element 102 may be operated selectively or simultaneously. A user of the wire mesh and microwave heater 100 may utilize the operator console 116 to operate the wire mesh and microwave heater 100 as desired. Conductors (see FIG. 2) may pierce the sidewall 110. In exemplary embodiments, at least one wire mesh element 102 may be disposed in or adjacent to the oven cavity 108. In embodiments, the wire mesh element 102 is disposed in the oven cavity 108 to radiate black body radiation on the item to be heated.

In exemplary embodiments, the sidewalls 110 of the oven cavity 108 may act as a Faraday cage or shield. A Faraday cage or Faraday shield is an enclosure formed by conductive material or by a mesh of such material. Such an enclosure blocks external static and non-static electric fields by channeling electricity along and around, but not through, the mesh, providing constant voltage on all sides of the enclosure. Since the difference in voltage is the measure of electrical potential, no current flows through the space. In exemplary embodiments, the sidewalls 110 of the oven cavity 102 may act as a reflector shield for the radiation generated by the wire mesh element 102.

In some embodiments, the high wattage power supply 106 may include a stored energy device 112. Power in excess of the capacity of the AC power line may be provided by the stored energy device 112. A microwave controller (not shown) may operate the wire mesh and microwave heater 100 as desired by energizing the magnetron 104, the wire mesh element 102 or both as desired by a user. To effectuate the operation as desired by user, the microwave controller may pulse delivery of electrical energy to the wire mesh element 102. The pulse delivery of electrical energy to the wire mesh element 102 may include changing a duration of energy delivery, changing an amplitude of energy delivery, or a combination thereof. In some embodiments, the microwave controller may control the intensity of the electrical energy delivered to the wire mesh element 102.

FIG. 2 is a schematic view of a conductor piercing a sidewall of a microwave oven cavity, according to various embodiments.

A sidewall 216 of a microwave oven cavity 218 may allow a passage for or be pierced by conductors 208, 210. The conductors 208, 210 energize the wire mesh element 212 from a voltage source 214. At the point of the passage or piercing of the sidewall 216, conductors 208, 210 may be surrounded by a screening gland or connector 204, for example, a 360° gland or connector. In embodiments, conductors 208, 210 are filtered, for example, by a DC power supply filter, so that any microwaves conducted by the conductors 208, 210 through the sidewall 216 may be eliminated in order to control microwave leakage or leakage currents from the oven cavity 218. The wire mesh element 212 may be secured to the conductors 208, 210 via a weld or the like. The conductors 208, 210 may be rotatable in a direction indicated by arrow 222. A portion of the conductors 208, 210 may be rotatable only within the oven cavity 218. The rotation of the conductors 208, 210 may keep the wire mesh 212 under tension.

In exemplary embodiments, a Faraday cage 202 may be provided. The Faraday cage 202 may be disposed such that the screening gland or connector 204 is disposed in a void defined by the sidewall 216 and the Faraday cage 202.

FIG. 3 is a schematic view of a wire mesh heating element secured to sidewalls of a microwave oven cavity.

A microwave and wire mesh oven 300 may include a microwave oven cavity 302 defined by a sidewall 308. A wire mesh heating element 312 is disposed in the microwave oven cavity 302. The wire mesh heating element 312 is disposed in electrical contact with conductors 304, 306. A fastener 310 may be disposed in a sidewall 308 of the oven cavity 302. The fastener 310 may be a tensioning device that can keep the wire mesh 312 taut. In some embodiments, the wire mesh 312 may have a tensioning material 314, for example, silicon, disposed along one or more edges of the wire mesh 312. The fastener 310 can be secured in the tensioning material 314 in order to keep the wire mesh 312 taut. The wire mesh 312 may include a bend, splined, rod or the like (not shown) to prevent the wire mesh 312 from sagging.

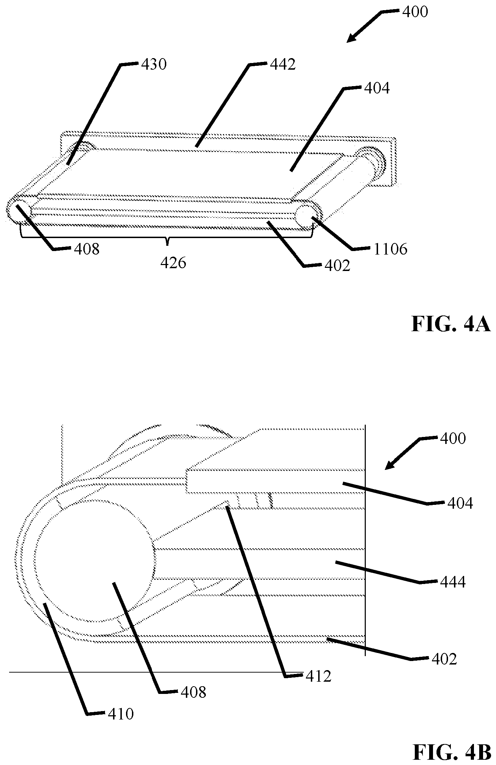

FIG. 4A is a logical view of a wire mesh heater assembly, according to various embodiments.

FIG. 4B is an expanded logical view of a wire mesh heater assembly, according to various embodiments.

A wire mesh assembly 400 may include the wire mesh 402 and an elastic 404. The wire mesh assembly 400 may include a secondary conductor 410 (see FIG. 4B). The elastic 404 may be secured, fastened or joined to one or more edges of the wire mesh 402 to form a bendable closed loop 430. The elastic 404 maybe fastened to one or more edges of the wire mesh 402 using a fastener (not shown) such as a bolt and nut, or the like. The elastic 404 may be secured or joined to one or more edges of the wire mesh 402 by embedding one of the edges in the elastic 404. In some embodiments, the elastic maybe secured or joined to one or more edges of the wire mesh 402 by securing one of the edges of the elastic 404 with a fastener, such as, a plate securing with a nut/bolt, a rivet, or the like. The closed loop 430 may be disposed over two conductors 406, 408 to provide a heat zone 426 between the two conductors 406, 408 (primary conductors). In exemplary embodiments, the secondary conductor 410 contacts one or more of the two conductors 406, 408. The two conductors 406, 408 can be energized by a voltage source (not shown) in series with a switch (not shown). The voltage source may be a DC voltage source.

The elastic 404 may be a springy material able to withstand high temperatures, for example, silicone. The wire mesh 402 may be secured or fastened to the secondary conductor 410. The secondary conductor 410 may be movably disposed over one or more of the two conductors 406, 408 in order to provide a high-performing electrical contact between the wire mesh 402 and one or more of the two conductors 406, 408. In some embodiments, a solder, swage, weld or the like may be used to secure the wire mesh 402 to the secondary conductor 410. The wire mesh assembly 400 can be disposed under tension (tautly) over the two conductors 406, 408. In some embodiments, the two conductors 406, 408 may be immovably secured in a holder 442. In some embodiments, one of the two conductors 406, 408 may be movably secured in the holder 442, while the other of the two conductors 406, 408 may be immovably secured in the holder 442. A heat shield 444 may be disposed between the heat zone 426 and the elastic material 404. In exemplary embodiments, the heat shield 444 may be glass. In exemplary embodiments, the heat shield may be secured in the two conductors 406, 408 in a slot 412.

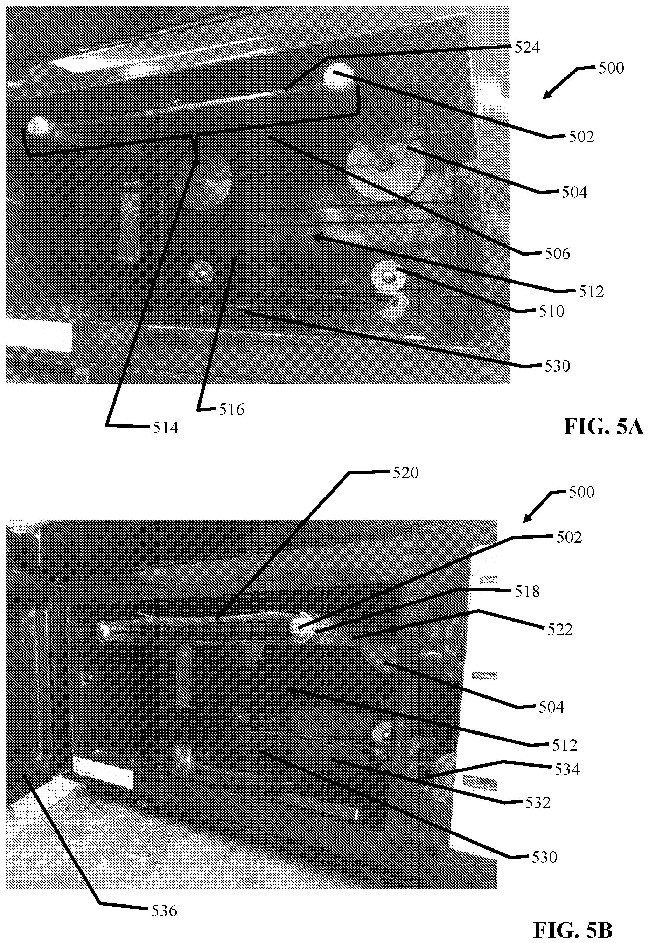

FIG. 5A is an isometric view of a microwave mesh heater, according to various embodiments.

FIG. 5B is an isometric view of a microwave mesh heater, according to various embodiments.

A microwave mesh heater 500 may include the wire mesh sub-assembly 514 including one or more primary conductors 502 and a heat shield 506. The wire mesh sub-assembly 514 may be secured to a wall or sidewall 516 of microwave mesh heater 500. A flange or connector 504 can be disposed around the one or more primary conductors 502. The flange or connector 504 can be used to prevent a leakage of microwave waves from an oven cavity 512. The oven cavity 512 may be defined at least in part by the sidewall 516. A thin film insulator (not shown) can be disposed between the flange or connector 504 and the sidewall 516. In some embodiments, a sidewall of microwave mesh heater 500 may include a turntable 530 for a tray to rotate thereupon. A heat shield 524 may be disposed between the one more conductors 502. In some embodiments, openings behind washers 510 may be used to secure a second wire mesh sub-assembly.

As shown in FIG. 5B, the microwave mesh heater 500 includes a wire mesh 522 and may include a secondary conductor 518 disposed around the one or more conductors 502. An elastic 520 may be secured, fastened or joined to one or more edges of the wire mesh 522 to form a bendable closed loop. The elastic 520 maybe fastened to one or more edges of the wire mesh 522 using a fastener (not shown) such as a bolt and nut, or the like. The elastic 520 maybe secured or joined to one or more edges of the wire mesh 522 by embedding one of the edges in the elastic 520. In some embodiments, the elastic 520 maybe secured or joined to one or more edges of the wire mesh 522 by securing one of the edges of the elastic 520 with a fastener, such as, a plate securing with a nut/bolt, a rivet, or the like. The closed loop may be disposed over the conductors 502 to provide a heat zone between the two conductors 502 (primary conductors). In exemplary embodiments, a secondary conductor 518 contacts one or more of the two conductors 502. The two conductors 502 can be energized by a voltage source (not shown) in series with a switch (not shown). The voltage source may be a DC voltage source. In exemplary embodiments, the DC voltage source may be connected to an AC powerline. The AC powerline may be used to charge an energy storage device, such as, a battery, a capacitor or the like. The DC voltage source may draw power from the AC powerline, the energy storage, or another DC voltage source, singly or in combination, when energizing the wire mesh 522.

The elastic 520 may be a springy material able to withstand high temperatures, for example, silicone. The wire mesh 522 may be secured or fastened to the secondary conductor 518. The secondary conductor 518 may be movably disposed over one or more of the two conductors 502 in order to provide a high-performing electrical contact between the wire mesh 522 and one or more of the two conductors 502. In some embodiments, a solder, swage, weld or the like may be used to secure the wire mesh 522 to the secondary conductor 518. The wire mesh 522 can be disposed under tension (tautly) over the two conductors 502 with the aid of the elastic 520. In some embodiments, the two conductors 502 may be immovably secured to the sidewall 516. In some embodiments, one of the two conductors 502 may be movably secured in the wire mesh sub-assembly 514, while the other of the two conductors 502 may be immovably secured in the wire mesh sub-assembly 514. The heat shield 524 may be disposed between the wire mesh 522 (a heated portion of the wire mesh 522) and the elastic material 520. In exemplary embodiments, the heat shield 524 may be glass, for example, a glass suitable for use in high temperature environments, tempered glass. In exemplary embodiments, edges of the heat shield 524 may be secured by or disposed in the two conductors 502.

A platen or tray 532 may be disposed about the turntable 520. The microwave mesh oven 500 may use a latch 534 to secure a microwave oven door 536. The latch 534 may incorporate a failsafe switch that may prohibit operation of the microwave mesh oven 500 unless the microwave oven door 536 is closed.

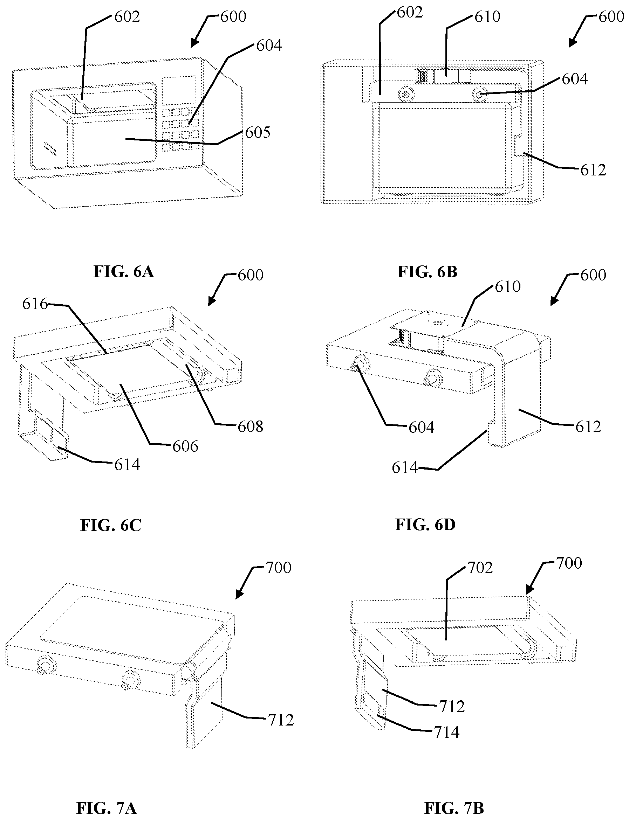

FIG. 6A is an isometric view of a microwave mesh heater including an air duct, according to various embodiments.

FIG. 6B is an isometric view of a cutout of a microwave mesh heater including an air duct, according to various embodiments.

FIG. 6C is an isometric view of a wire mesh heater assembly including an air duct, according to various embodiments.

FIG. 6D is an isometric view of a wire mesh heater assembly including an air duct, according to various embodiments.

In some embodiments, a microwave mesh heater 600 may include a wire mesh heater assembly 602 and a control panel 604. The microwave mesh heater 600 may include a heating cavity 605. As seen in the cutout of FIG. 6B and FIG. 6C, the microwave mesh heater 600 may provide convection heat by moving a fluid like air over a wire mesh element 606. Air heating by the wire mesh element 606 can then flow over and around an item to be heated. An inlet 614 of an air duct 612 maybe used to intake air from the oven cavity 605. The air duct 612 can convey the intake air to an outlet 616 and expel the intake air from an outlet 616 (see FIG. 6C). The air movement in the air duct 612 can be facilitated via a fan 610. Air exiting the outlet 616 may be distributed across/over a wire mesh element 606 and back into the oven cavity 605 to impinge upon the item to be heated. The wire mesh element 606 can be disposed over a primary conductor 604 and a secondary conductor 608.

FIG. 7A is an isometric view of a wire mesh heater assembly including an air duct, according to various embodiments.

FIG. 7B is an isometric view of a wire mesh heater assembly including an air duct, according to various embodiments.

In some embodiments, a wire mesh heater assembly 700 may include a wire mesh element 702, an air duct 712, an inlet 714, an outlet (not shown) and a fan (not shown).

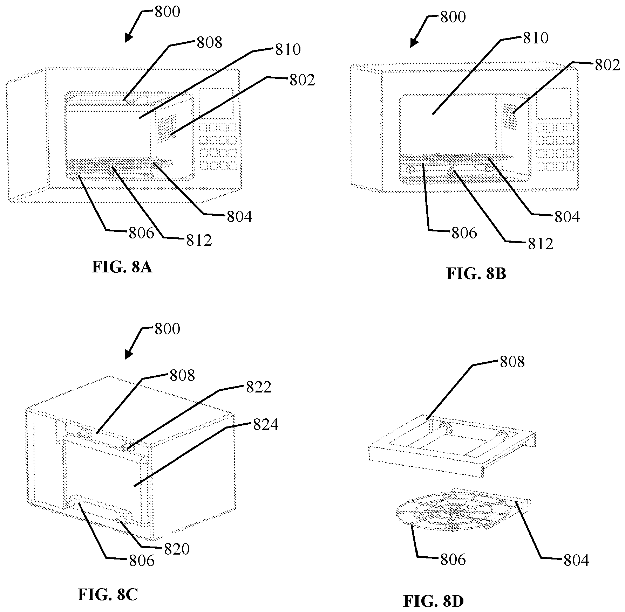

FIG. 8A is an isometric view of a microwave mesh heater including a wire mesh heater assembly disposed near the bottom of an oven cavity, according to various embodiments.

FIG. 8B is an isometric view of a microwave mesh heater including a wire mesh heater assembly disposed near the bottom of an oven cavity, according to various embodiments.

FIG. 8C is an isometric view of a microwave mesh heater, according to various embodiments.

FIG. 8D is an isometric view of a top and bottom wire mesh heater assembly, according to various embodiments.

In some embodiments, a microwave mesh heater 800 may include a microwave outlet 802 behind which a magnetron (not shown) is disposed, a rack 804 where an item to be heated may be disposed, a bottom wire mesh heater assembly 806, a top wire mesh heater assembly 808, an oven cavity 810 and a stand 812 disposed to maintain a distance between the bottom wire mesh heater assembly 806 and the stand 812. As seen in the FIG. 8C, conductors 820 of the bottom wire mesh heater assembly 806 can extend outside a sidewall 824 of the oven cavity 810. In some embodiments, conductors 824 of the top wire mesh heater assembly 804 can extend outside a sidewall 824 of the oven cavity 810.

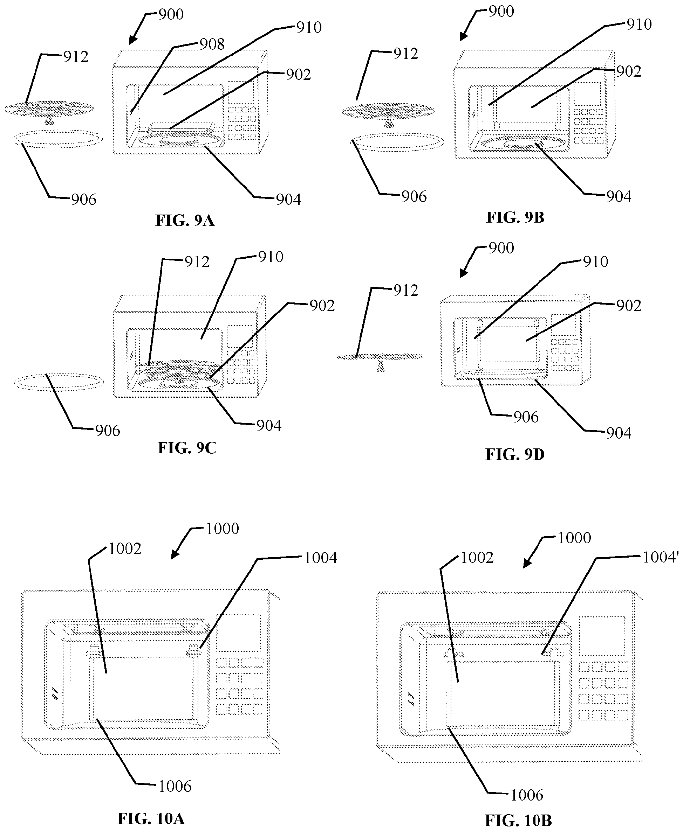

FIG. 9A is an isometric view of a microwave mesh heater including a wire mesh heater assembly disposed parallel to a bottom of an oven cavity, according to various embodiments.

FIG. 9B is an isometric view of a microwave mesh heater including a wire mesh heater assembly disposed orthogonal to a bottom of an oven cavity, according to various embodiments.

FIG. 9C is an isometric view of a microwave mesh heater including a wire mesh heater assembly disposed parallel to a bottom of an oven cavity and a rack disposed therein, according to various embodiments.

FIG. 9D is an isometric view of a microwave mesh heater including a wire mesh heater assembly disposed orthogonal to a bottom of an oven cavity and a tray disposed therein, according to various embodiments.

In some embodiments, a microwave mesh heater 900 may include a bottom surface 904, a microwave outlet 908 behind which a magnetron (not shown) is disposed, a tray 906, a rack 912, a wire mesh heater assembly 902, an oven cavity 910 and a stand 912. As seen in FIG. 9B, in one configuration, the microwave mesh heater 900 may have the wire mesh heater assembly 902 disposed orthogonal to the bottom 904 of the oven cavity 910. As seen in FIG. 9C, in one configuration, the stand 912 may be disposed in the oven cavity 910 to maintain a distance between the wire mesh heater assembly 902 disposed horizontal to the bottom 904 of the oven cavity 910 and the wire mesh heater assembly 902. As seen in FIG. 9B, in one configuration, the microwave mesh heater 900 may have the wire mesh heater assembly 902 disposed orthogonal to the bottom 904 of the oven cavity 910 and the tray 906 disposed therein.

FIG. 10A is an isometric view of a microwave mesh heater including a wire mesh heater assembly disposed orthogonal to a bottom of an oven cavity, according to various embodiments.

FIG. 10B is an isometric view of a microwave mesh heater including a wire mesh heater assembly disposed orthogonal to a bottom of an oven cavity, according to various embodiments.

FIG. 10A illustrates a microwave mesh heater 1000 including a wire mesh heater assembly 1002 disposed orthogonal to a bottom of an oven cavity. The wire mesh heater is rotatable about a hinge/pivot 1006 and locked into the orthogonal position with a catch 1004 disposed in a locked position. FIG. 10B illustrate the catch 1004' disposed in an unlocked position. With the catch 1004' in the unlocked position, the wire mesh heater assembly 1002 can be disposed parallel to the bottom of the oven cavity.

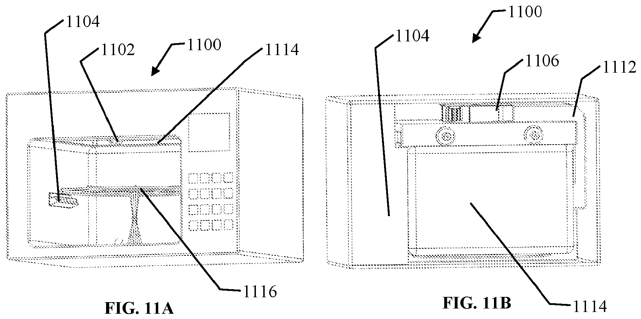

FIG. 11A is an isometric view of a wire mesh heater assembly including an air duct, according to various embodiments.

FIG. 11B is an isometric view of a wire mesh heater assembly including an air duct, according to various embodiments.

In some embodiments, a wire mesh heater assembly 1100 may include a wire mesh element 1102, an air duct 1112 (see FIG. 11B), an inlet 1114, an outlet 1104 and a fan 1106. In exemplary embodiments, air may be drawn into the air duct 1112 by operating the fan 1106 to draw air through/across the wire mesh element 1102. Air drawn into the air duct 1112 may be expelled by one or more outlets 1104. In exemplary embodiments, the one or more outlets 1104 may expel air below the stand 1116 to heat an underside of an item (not shown) placed on the stand 1116. In exemplary embodiments, the one or more outlets 1104 may expel air to heat a side of an item (not shown) placed on the stand 1116. In exemplary embodiments, the one or more outlets 1104 may expel air to heat a topside of an item (not shown) placed on the stand 1116. In exemplary embodiments, the one or more outlets 1104 may expel air via one or more nozzles to create a jet-stream like airflow that impinges the item (not shown) on the stand 1116.

The examples presented herein are intended to illustrate potential and specific implementations. It can be appreciated that the examples are intended primarily for purposes of illustration for those skilled in the art. The diagrams depicted herein are provided by way of example. There can be variations to these diagrams or the operations described herein without departing from the scope of the claims.

## Claims

1. A microwave wire mesh oven (100) comprising:
a microwave oven cavity (108);
a heating element; and
a magnetron (104) configured to generate microwaves;
wherein some of the generated microwaves impinge on the heating element;
**characterised in that**:
the microwave oven further comprises a conductor (208, 210) disposed in the oven cavity and
electrically connecting the heating element to a power supply (106);
the heating element is a wire mesh element (102) positioned to radiate black body radiation into the microwave oven cavity; and
a power supply filter in electrical connection with the wire mesh element, wherein the power supply filter removes microwave energy that impinges on the wire mesh element.

2. The oven of claim 1, further comprising a high wattage power supply (106) electrically connected to the wire mesh element, wherein the high wattage power supply supplies the wire mesh element with a low-voltage high amperage direct current.

3. The oven of claim 1, further comprising a high wattage power supply (106) electrically connected to the wire mesh element, wherein the high wattage power supply comprises a Direct Current (DC) power supply; and
a braided electrical cable to electrically connect the DC power supply with the wire mesh element.

4. The oven of claim 1, further comprising a high wattage power supply (106) electrically connected to the wire mesh element, wherein the high wattage power supply supplies energy to the magnetron and the wire mesh element simultaneously.

5. The oven of claim 1, further comprising an opening in a sidewall (110) of the microwave oven cavity, wherein the conductor traverses through the sidewall via the opening and the opening is shielded to prevent leakage of microwaves through the opening.

6. The oven of claim 1, wherein the microwave oven cavity is defined by a sidewall (110), and the wire mesh element is movable between a position parallel to the sidewall or a position orthogonal to the sidewall wall.

7. The oven of claim 1, wherein the wire mesh element comprises a plurality of round or oval openings in the wire mesh element.

8. The oven of claim 1, further comprising a fan (610) to generate an airflow through the wire mesh element to heat the airflow, wherein the heated airflow is directed into the microwave oven cavity.

9. The oven of claim 1, further comprising:
an air inlet (614) disposed in the microwave oven cavity, wherein the air inlet is above the wire mesh element;
a fan (610) to draw air from the air inlet to generate an airflow; and
an air outlet (616) disposed in the microwave oven cavity, wherein the air outlet is below the wire mesh element,
wherein the airflow is heated by the wire mesh element.

10. The oven of claim 1, further comprising a stand (812) disposed in the oven cavity to support an item to heated, wherein the stand is movable with respect to the wire mesh heater.

11. The oven of claim 1, further comprising a first substrate and a second substrate, wherein the wire mesh element is disposed between the first substrate and the second substrate, the first substrate comprises a material that is a heat conductor and an electrical insulator, and the wire mesh element is disposed in the microwave oven cavity such that the first substrate faces an item to be heated.

12. The oven of claim 11, wherein the second substrate (524) comprises a material that is a heat insulator and an electrical insulator.

13. The oven of claim 11, wherein the first substrate or the second substrate comprises one or more of silicon, glass, ceramic or the like.

14. The oven of claim 11, wherein the first substrate provides a surface to support an item to be heated.

## Patentansprüche

1. Mikrowellendrahtgitterofen (100), umfassend:
einen Mikrowellenhohlraum (108);
ein Heizelement; und
ein Magnetron (104), das ausgelegt ist, um Mikrowellen zu erzeugen;
wobei manche der erzeugten Mikrowellen auf das Heizelement aufprallen;
**dadurch gekennzeichnet, dass**:
der Mikrowellenofen weiter einen Leiter (208, 210) umfasst, der in dem Ofenhohlraum angeordnet ist, und das Heizelement mit einer Stromversorgung (106) elektrisch verbindet;
das Heizelement ein Drahtgitterelement (102) ist, das positioniert ist, um Schwarzkörperstrahlung in den Mikrowellenhohlraum zu strahlen; und
einen Stromversorgungsfilter in elektrischer Verbindung mit dem Drahtgitterelement, wobei der Stromversorgungfilter Mikrowellenenergie entfernt, die auf das Drahtgitterelement aufprallt.

2. Ofen nach Anspruch 1, weiter umfassend eine Hochwattstromversorgung (106), die elektrisch mit dem Drahtgitterelement verbunden ist, wobei die Hochwattstromversorgung an das Drahtgitterelement einen Niederspannungsgleichstrom mit hoher Stromstärke abgibt.

3. Ofen nach Anspruch 1, weiter umfassend eine Hochwattstromversorgung (106), die elektrisch mit dem Drahtgitterelement verbunden ist, wobei die Hochwattstromversorgung eine Gleichstrom-(DC)-Stromversorgung umfasst; und
ein geflochtenes elektrisches Kabel, um die DC-Stromversorgung mit dem Drahtgitterelement elektrisch zu verbinden.

4. Ofen nach Anspruch 1, weiter umfassend eine Hochwattstromversorgung (106), die elektrisch mit dem Drahtgitterelement verbunden ist, wobei die Hochwattstromversorgung Energie an das Magnetron und das Drahtgitterelement gleichzeitig abgibt.

5. Ofen nach Anspruch 1, weiter umfassend eine Öffnung in einer Seitenwand (110) des Mikrowellenhohlraums, wobei der Leiter über die Öffnung durch die Seitenwand durchgeht und die Öffnung abgeschirmt ist, um Mikrowellenaustritt durch die Öffnung zu verhindern.

6. Ofen nach Anspruch 1, wobei der Mikrowellenhohlraum durch eine Seitenwand (110) definiert ist, und das Drahtgitterelement zwischen einer Position parallel zu der Seitenwand oder einer Position orthogonal zu der Seitenwandwand bewegbar ist.

7. Ofen nach Anspruch 1, wobei das Drahtgitterelement eine Vielzahl von runden oder ovalen Öffnungen im Drahtgitterelement umfasst.

8. Ofen nach Anspruch 1, weiter umfassend einen Ventilator (610), um einen Luftstrom durch das Drahtgitterelement zu erzeugen, um den Luftstrom zu erhitzen, wobei der erhitzte Luftstrom in den Mikrowellenhohlraum geleitet wird.

9. Ofen nach Anspruch 1, weiter umfassend:
einen Lufteinlass (614), der im Mikrowellenhohlraum angeordnet ist, wobei der Lufteinlass über dem Drahtgitterelement liegt;
einen Ventilator (610), um Luft aus dem Lufteinlass zu ziehen, um einen Luftstrom zu erzeugen; und
einen Luftauslass (616), der im Mikrowellenhohlraum angeordnet ist, wobei der Luftauslass unter dem Drahtgitterelement liegt,
wobei der Luftstrom durch das Drahtgitterelement erhitzt wird.

10. Ofen nach Anspruch 1, weiter umfassend ein Gestell (812), das im Ofenhohlraum angeordnet ist, um ein zu erhitzendes Produkt zu tragen, wobei das Gestell in Bezug auf den Drahtgittererhitzer bewegbar ist.

11. Ofen nach Anspruch 1, weiter umfassend ein erstes Substrat und ein zweites Substrat, wobei das Drahtgitterelement zwischen dem ersten Substrat und dem zweiten Substrat angeordnet ist, wobei das erste Substrat ein Material umfasst, das ein Wärmeleiter und ein elektrischer Isolator ist, und das Drahtgitterelement in dem Mikrowellenhohlraum so angeordnet ist, dass das erste Substrat zu einem zu erhitzenden Produkt zeigt.

12. Ofen nach Anspruch 11, wobei das zweite Substrat (524) ein Material umfasst, das ein Wärmeisolator und ein elektrischer Isolator ist.

13. Ofen nach Anspruch 11, wobei das erste Substrat oder das zweite Substrat eines oder mehr umfasst von Silizium, Glas, Keramik oder Ähnlichem.

14. Ofen nach Anspruch 11, wobei das erste Substrat eine Oberfläche bereitstellt, um ein zu erhitzendes Produkt zu tragen.

## Revendications

1. Four micro-ondes à treillis métallique (100) comprenant :
une cavité de four micro-ondes (108) ;
un élément chauffant ; et
un magnétron (104) configuré pour générer des micro-ondes ;
dans lequel certaines des micro-ondes générées viennent heurter l'élément chauffant ;
**caractérisé en ce que** :
le four micro-ondes comprend en outre un conducteur (208, 210) disposé dans la cavité de four et raccordant électriquement l'élément chauffant à une alimentation électrique (106) ;
l'élément chauffant est un élément de treillis métallique (102) positionné de façon à émettre un rayonnement de corps noir dans la cavité de four micro-ondes ; et
un filtre d'alimentation électrique raccordé électriquement à l'élément de treillis métallique, dans lequel le filtre d'alimentation électrique élimine une énergie de micro-ondes qui vient heurter l'élément de treillis métallique.

2. Four selon la revendication 1, comprenant en outre une alimentation électrique à puissance élevée (106) raccordée électriquement à l'élément de treillis métallique, dans lequel l'alimentation électrique à puissance élevée alimente l'élément de treillis métallique avec un courant continu de basse puissance à ampérage élevé.

3. Four selon la revendication 1, comprenant en outre une alimentation électrique à puissance élevée (106) raccordée électriquement à l'élément de treillis métallique, dans lequel l'alimentation électrique à puissance élevée comprend une alimentation électrique à courant continu (CC) ; et
un câble électrique tressé destiné à raccorder électriquement l'alimentation électrique CC avec l'élément de treillis métallique.

4. Four selon la revendication 1, comprenant en outre une alimentation électrique à puissance élevée (106) raccordée électriquement à l'élément de treillis métallique, dans lequel l'alimentation électrique à puissance élevée alimente en énergie le magnétron et l'élément de treillis métallique simultanément.

5. Four selon la revendication 1, comprenant en outre une ouverture dans une paroi latérale (110) de la cavité de four micro-ondes, dans lequel le conducteur traverse la paroi latérale via l'ouverture et l'ouverture est blindée pour empêcher une fuite de micro-ondes par l'ouverture.

6. Four selon la revendication 1, dans lequel la cavité de four micro-ondes est définie par une paroi latérale (110), et l'élément de treillis métallique est mobile entre une position parallèle à la paroi latérale ou une position orthogonale par rapport à la paroi de latérale.

7. Four selon la revendication 1, dans lequel l'élément de treillis métallique comprend une pluralité d'ouvertures arrondies ou ovales dans l'élément de treillis métallique.

8. Four selon la revendication 1, comprenant en outre un ventilateur (610) pour générer un flux d'air à travers l'élément de treillis métallique pour chauffer le flux d'air, dans lequel le flux d'air chauffé est dirigé dans la cavité de four micro-ondes.

9. Four selon la revendication 1, comprenant en outre :
une entrée d'air (614) disposée dans la cavité de four micro-ondes, dans lequel l'entrée d'air est au-dessus de l'élément de treillis métallique ;
un ventilateur (610) pour aspirer de l'air de l'entrée d'air pour générer un flux d'air ; et
une sortie d'air (616) disposée dans la cavité de four micro-ondes, dans lequel la sortie d'air est sous l'élément de treillis métallique,
dans lequel le flux d'air est chauffé par l'élément de treillis métallique.

10. Four selon la revendication 1, comprenant en outre un socle (812) disposé dans la cavité de four pour supporter un article à chauffer, dans lequel le support est mobile par rapport au chauffage de treillis métallique.

11. Four selon la revendication 1, comprenant en outre un premier substrat et un second substrat, dans lequel l'élément de treillis métallique est disposé entre le premier substrat et le second substrat, le premier substrat comprend un matériau qui est un thermo-conducteur et un isolant électrique, et l'élément de treillis métallique est disposé dans la cavité de four micro-ondes de telle sorte que le premier substrat soit face à un article à chauffer.

12. Four selon la revendication 11, dans lequel le second substrat (524) comprend un matériau qui est un isolant thermique et un isolant électrique.

13. Four selon la revendication 11, dans lequel le premier substrat ou le second substrat comprend un ou plusieurs parmi du silicium, du verre, de la céramique ou similaires.

14. Four selon la revendication 11, dans lequel le premier substrat fournit une surface pour supporter un article à chauffer.
